# EUROPEAN PATENT APPLICATION

(11) **EP 4 761 368 A1**
(43) Date of publication of application: **17.06.2026**
(21) Application number: 23948035.3
(22) Date of filing: 10.08.2023
(51) Int. Cl.: H04W 36/26

(54) **WIRELESS COMMUNICATION METHOD, TERMINAL DEVICE AND NETWORK DEVICE**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/112136
(87) International publication number: WO 2025/030460

(57) **Abstract**

The present disclosure provides a method for wireless communication, a terminal device, and a network device. The method includes executing, by a terminal device, a first operation based on first information. The first information includes one or more of: network energy saving (NES) information of a first cell where the terminal device is located, NES information of a second cell, and a first conditional handover threshold related to an NES state of the first cell and/or an NES state of the second cell. The first operation includes one or more of: determining a cell that meets a conditional handover requirement; determining a first time for a handover from the first cell to the second cell; and measuring a third cell in a first time period between a second time and the first time to determine whether the third cell meets the conditional handover requirement. The second time is a time when the terminal device determines that the second cell meets the conditional handover requirement. When the terminal device executes the conditional handover, it takes the first information into account, thereby improving the conditional handover process while also considering the energy saving for the network device.

## Description

### TECHNICAL FIELD

The present disclosure relates to the field of communication technology, and more specifically to a method for wireless communication, a terminal device, and a network device.

### BACKGROUND

In conditional handover, a terminal device may measure one or more potential target cells. After the terminal device receives a configuration for the conditional handover, it may determine whether the potential target cells meet a conditional handover requirement based on measurement results of the potential target cells. When one of the one or more potential target cells meets the conditional handover requirement, the terminal device may autonomously execute the configuration in the handover command and initiate handover access directly to the target cell that meets the requirement.

### SUMMARY

The present disclosure provides a method for wireless communication, a terminal device, and a network device. Various aspects related to the present disclosure are described below.

According to a first aspect, a method for wireless communication is provided, including: executing, by a terminal device, a first operation based on first information; where the first information includes one or more of: network energy saving, NES, information of a first cell where the terminal device is located, NES information of a second cell, and a first conditional handover threshold related to one or both of an NES state of the first cell and an NES state of the second cell; and where the first operation includes one or more of: determining a cell that meets a conditional handover requirement; determining a first time for a handover from the first cell to the second cell; and measuring a third cell in a first time period between a second time and the first time to determine whether the third cell meets the conditional handover requirement, wherein the second time is a time when the terminal device determines that the second cell meets the conditional handover requirement.

According to a second aspect, a method for wireless communication is provided, including: sending, by a network device, indication information; where the indication information includes second indication information, the second indication information is used to indicate first information, and the first information includes one or more of: network energy saving, NES, information of a first cell where a terminal device is located, NES information of a second cell, and a first conditional handover threshold related to one or both of an NES state of the first cell and an NES state of the second cell.

According to a third aspect, a terminal device is provided, including: an execution unit, configured to execute a first operation based on first information; where the first information includes one or more of: network energy saving, NES, information of a first cell where the terminal device is located, NES information of a second cell, and a first conditional handover threshold related to one or both of an NES state of the first cell and an NES state of the second cell; and where the first operation includes one or more of: determining a cell that meets a conditional handover requirement; determining a first time for a handover from the first cell to the second cell; and measuring a third cell in a first time period between a second time and the first time to determine whether the third cell meets the conditional handover requirement, wherein the second time is a time when the terminal device determines that the second cell meets the conditional handover requirement.

According to a fourth aspect, a network device is provided, including: a sending unit, configured to send indication information; where the indication information includes second indication information, the second indication information is used to indicate first information, and the first information includes one or more of: network energy saving, NES, information of a first cell where a terminal device is located, NES information of a second cell, and a first conditional handover threshold related to one or both of an NES state of the first cell and an NES state of the second cell.

According to a fifth aspect, a terminal device is provided, including a memory and a processor, where the memory is configured to store one or more computer programs, and the processor is configured to invoke the computer programs in the memory to cause the terminal to perform some or all of the operations in the method according to the first aspect.

According to a sixth aspect, a network device is provided, including a processor, a memory, and a transceiver, where the memory is configured to store one or more computer programs, and the processor is configured to invoke the computer programs in the memory to cause the network device to perform some or all of the operations in the method according to the second aspect.

According to a seventh aspect, a communication system is provided, including the above terminal device and/or network device. In another possible design, the system further includes other devices that interact with the terminal device or network device in the solutions provided in the embodiments of the present disclosure.

According to an eighth aspect, a computer-readable storage medium is provided, storing a computer program, where the computer program causes the terminal device and/or network device to perform some or all of the operations in the methods according to various aspects.

According to a ninth aspect, a computer program product is provided, including a non-transitory computer-readable storage medium that stores a computer program, where the computer program is executable to cause the terminal device and/or network device to perform some or all of the operations in the methods according to various aspects. In some implementations, the computer program product may be a software installation package.

According to a tenth aspect, a chip is provided, including a memory and a processor, where the processor is configured to invoke a computer program from the memory to perform some or all of the operations in the methods according to various aspects.

Based on the first information, when executing the conditional handover, the terminal device takes into account not only the conditional handover requirements but also one or more of the network energy saving (NES) information of the source cell, the NES information of the potential target cells, and the conditional handover threshold, thereby improving the conditional handover process to balance energy-saving needs of the network device with the handover needs of the terminal device.

### BRIEF DESCRIPTION OF THE DRAWINGS

FIG. 1 is a wireless communication system applied in an embodiment of the present disclosure.
FIG. 2 is an example diagram of a network device performing NES measures.
FIG. 3 is an example diagram of a conditional handover procedure.
FIG. 4 is a schematic flowchart of a method for wireless communication according to an embodiment of the present disclosure.
FIG. 5 is a schematic diagram of a scenario to which an embodiment of the present disclosure is applicable.
FIG. 6 is another schematic diagram of a scenario to which an embodiment of the present disclosure is applicable.
FIG. 7 is yet another schematic diagram of a scenario to which an embodiment of the present disclosure is applicable.
FIG. 8 is still another schematic diagram of a scenario to which an embodiment of the present disclosure is applicable.
FIG. 9 is still yet another schematic diagram of a scenario to which an embodiment of the present disclosure is applicable.
FIG. 10 is another schematic flowchart of a method for wireless communication according to an embodiment of the present disclosure.
FIG. 11 is a schematic structural diagram of a terminal device according to an embodiment of the present disclosure.
FIG. 12 is a schematic structural diagram of a network device according to an embodiment of the present disclosure.
FIG. 13 is a schematic structural diagram of an apparatus for communication according to an embodiment of the present disclosure.

### DETAILED DESCRIPTION OF THE EMBODIMENTS

The following describes the technical solution in the present disclosure in combination with the attached drawings.

### COMMUNICATION SYSTEM

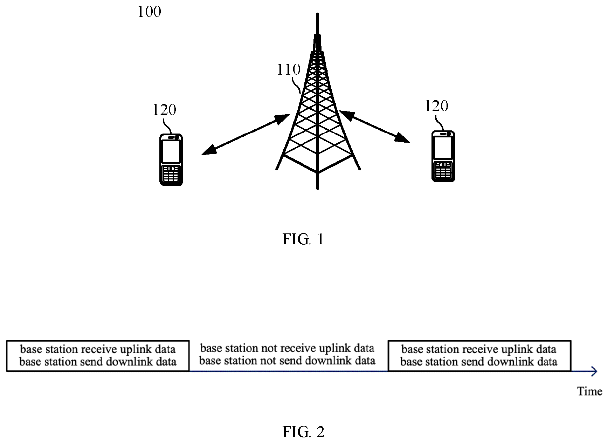

FIG. 1 is a wireless communication system 100 applied in embodiments of the present disclosure. The wireless communication system 100 includes a communication device. The communication device includes a network device 110 and a terminal device 120, and the network device 110 may be a device that communicates with the terminal device 120.

FIG. 1 exemplarily shows a network device and two terminals. Optionally, the wireless communication system 100 may include a plurality of network devices, and the coverage of each network device may include other numbers of terminal devices, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a 5^{th} generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communication system, or the like.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal device in the embodiments of the present disclosure may be a device that provides voice and/or data connectivity to a user, and may be used to connect a person, an object, and a machine, for example, a handheld device or a vehicle-mounted device having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal device. The network device may also include an access network device. The access network device provides communication coverage for a particular geographic area and communicates with the terminal device 120 located within the coverage area. The access network device may also be referred to as a radio access network device, a base station, etc. The access network device in the embodiments of the present disclosure may refer to a radio access network (RAN) node (or device) that accesses the terminal device to a wireless network. The access network device may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology and specific device form adopted by the access network device are not limited in the embodiments of the present disclosure.

The base station may be fixed or mobile. For example, a helicopter or drone may be configured to serve as a mobile base station, and one or more cells move according to the position of the mobile base station. In other examples, a helicopter or drone may be configured to serve as a device in communication with another base station.

The communication device involved in the wireless communication system may include not only the access network device and the terminal device but also a core network element. The core network element may be implemented through a device, meaning that the core network element is a core network device. It should be understood that the core network device may also be a network device.

The core network element in the embodiments of the present disclosure may include an element that processes and forwards signaling and data for users. For example, the core network device may include a core access and mobility management function (AMF), a session management function (SMF), a user plane gateway, a location management function (LMF), and other core network devices. Among them, the user plane gateway may be a server that has functions for managing mobility, routing, and forwarding of user plane data, typically located on a network side, such as a serving gateway (SGW), a packet data network gateway (PGW), or a user plane function (UPF), etc. Of course, the core network may also include other elements, which are not listed here.

In some deployments, the network device in the embodiments of the present disclosure may refer to the CU or the DU, or the network device includes the CU and the DU. The gNB may also include the AAU.

The network device and the terminal device may be deployed on land, including indoor or outdoor, handheld or vehicle-mounted, may be deployed on a water surface, and may also be deployed on an aircraft, a balloon, and a satellite in the air. A scenario in which the network device and the terminal device are located is not limited in the embodiments of the present disclosure.

It should be understood that all or part of functions of the communication device in the present disclosure may also be implemented by a software function running on hardware or implemented by a virtualization function instantiated on a platform (e.g., a cloud platform).

### NETWORK ENERGY SAVING (NES)

With the development of technology, some communication systems have begun to consider how to achieve the energy saving for the network device. Taking a 5G wireless communication system as an example, the adoption of higher frequency bands and larger bandwidths in the 5G wireless communication system results in higher energy consumption compared to a 4G system, thereby increasing electricity costs for operators.

In response to this, some communication systems have introduced network energy saving technologies (such as the network energy saving technology proposed in R18) based on their own network characteristics. Based on the network energy saving technology, the network device may operate in a power-saving mode or power-saving state for a certain period, referred to as a power-saving time period. For example, due to the use of high frequency bands in some communication systems (e.g., 5G systems), the geographical coverage of a cell is relatively small, leading to a limited number of terminals served by the cell. During a non-power-saving time period, an NES state of the cell is the power-saving state, allowing the network device to perform normal communication-related operations. During a power-saving time period, the NES state of the cell is a non-power-saving state, allowing the network device to only perform a part of operations that would typically be performed during the non-power-saving time period to achieve energy savings. Exemplarily, the network device may concentrate data transmission of terminal devices within a cell in the non-power-saving time period and refrain from transmitting data during the power-saving time period to achieve energy-saving effects. As shown in FIG. 2, the network device designates a portion of a cell-level time period during which the NES state of the cell is the power-saving state, allowing the network device to refrain from receiving uplink data and/or transmitting downlink data.

It should be noted that in the example shown in FIG. 2, the network device not receiving uplink data and not transmitting downlink data occur within the same time period. In some implementations, the time period for not receiving uplink data and the time period for not transmitting downlink data may be configured independently, meaning that these two time periods may be different. However, since downlink data transmission involves uplink hybrid automatic repeat request (HARQ) feedback, the network device is typically configured to set these two energy-saving operations within the same time period.

It should be understood that based on the example in FIG. 2, the network device may concentrate data transmission within a portion of the time period, thereby achieving the goal of reducing energy consumption of the network device.

### CONDITIONAL HANDOVER (CHO)

A primary goal of conditional handover is to enhance the reliability and robustness of user handover, addressing issues such as late handover due to prolonged handover preparation time or handover failure caused by a sudden decline in channel quality of a source cell during the handover process. A core idea of conditional handover is to pre-configure a handover command content for the terminal device in advance. A network device (source network device) corresponding to the source cell may prepare one or more potential target cells in advance and send them to the terminal device while the wireless signal quality of the source cell has not yet deteriorated. The terminal device may measure the one or more potential target cells. Upon receiving the configuration for conditional handover, the terminal device may determine whether the potential target cells meet the requirement for conditional handover based on measurement results of the potential target cells. When one of the one or more potential target cells meets the requirement for conditional handover, the terminal device may autonomously execute the configuration in the handover command and directly initiate access to the target cell that meets the requirement. Since the terminal device does not trigger measurement reporting when the handover conditions are met, and the terminal device has already obtained the configuration in the handover command in advance, the issue of measurement reporting and handover command being unable to be correctly received as mentioned above is addressed. Particularly in high-speed mobility scenarios or in situations where the signal rapidly deteriorates during handover, conditional handover may significantly improve the success rate of handover. Moreover, since the actual execution of the handover is determined by the terminal device based on wireless channel conditions of the target cell, a timing of the handover in conditional handover may better align with the wireless quality experienced by the terminal device.

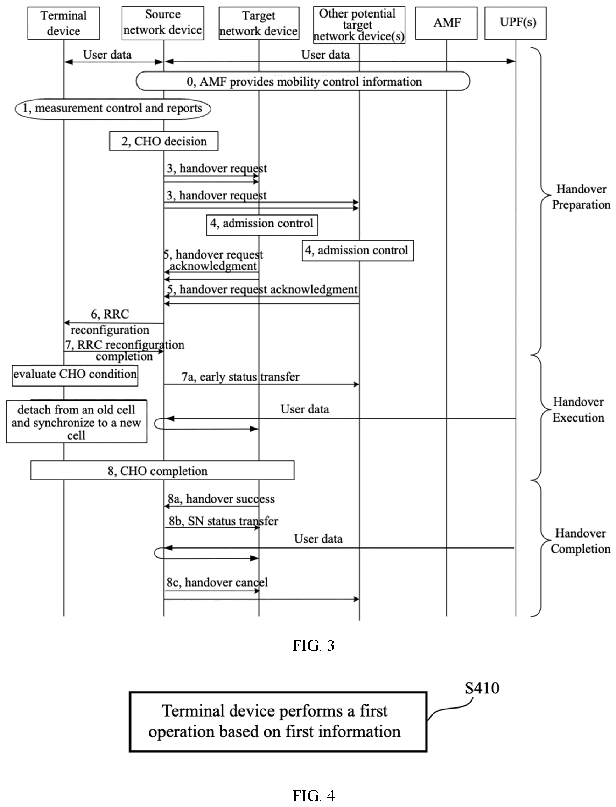

The handover process may generally be divided into three stages: handover preparation, handover execution, and handover completion. Below is a brief introduction to a conditional handover process in conjunction with FIG. 3. The process illustrated in FIG. 3 may be executed by a terminal device, a source network device (i.e., a network device corresponding to a source cell), a target network device (i.e., a network device corresponding to a target cell), other potential target network device(s), AMF, and UPF(s). For example, the source network device may be a source gNB, the target network device may be a target gNB, and the other potential target network device(s) may be other potential gNB(s).

### First Stage: Handover Preparation (Operations 1 to 7)

At operation 1, measurement control and reports are conducted between the source network device and the terminal device. Specifically, the source network device triggers the terminal device to perform measurements on neighbor cells, allowing the terminal device to measure the neighbor cells and report measurement results back to the source network device.

Before operation 1, user data may be transmitted between the terminal device and the source network device, as well as between the source network device and UPF.

As shown in FIG. 3, the first stage may further include operation 0. At operation 0, AMF provides mobility control information.

At operation 2, the source network device evaluates the measurement results reported by the terminal device to decide whether to trigger a handover (CHO decision).

At operation 3, if the source network device decides to trigger the handover, it may send a handover request to the target network device and other potential target network device(s).

At operation 4, upon receiving the handover request from the source network device, the target network device and other potential target network device(s) may start admission control based on service information carried by the source network device.

At operation 5, if the target network device decides to allow the terminal device to handover, it may send a handover request acknowledgment message to the source network device. Additionally, other potential target network device(s) may also send the handover request acknowledgment message to the source network device.

At operation 6, the source network device sends an RRC reconfiguration message regarding the potential target network device to the terminal device.

At operation 7, the terminal device sends RRC reconfiguration completion information to the source network device. At this point, the handover preparation phase is complete.

### Second Stage: Handover Execution (Operations 7a to 8)

After operation 7, the terminal device may evaluate CHO conditions.

At operation 7a, based on the evaluation results, the terminal device sends early status transfer to other potential target network device(s).

After operation 7a, the terminal device detaches from an old cell and synchronizes to a new cell.

At operation 8, the conditional handover is completed.

### Third Stage: Handover Completion (Operations 8a to 8c)

At operation 8a, the target network device sends a handover success message to the source network device.

At operation 8b, the source network device may forward buffered data, in-transit data packets, and sequence numbers (SN) associated with data to the target network device through SN status transfer.

After operation 8b, user data may be transmitted between the terminal device and the target network device.

At operation 8c, the source network device sends a handover cancel message to the target network device and other potential target network device(s). At this point, the handover is complete.

The applicant of the present disclosure has found that in a case where the network device implements NES measures, the conditional handover process may be influenced by NES. For example, during the conditional handover process in related technologies, the terminal device only considers whether the potential target cell meets the conditional handover requirement. In a case that a certain potential target cell meets the conditional handover requirement, the terminal device may immediately execute a handover to the cell. If the target cell is in a power-saving time period, the terminal device cannot send data immediately after the handover, resulting in additional data transmission delays. If the source cell is in a non-power-saving time period and the data being transmitted before and after the handover needs to maintain continuity, a significant amount of data should be transmitted between the source cell and the target cell to ensure a receiving end to correctly parse the data, thereby complicating the handover process.

FIG. 4 is a schematic flowchart of a method for wireless communication provided in an embodiment of the present disclosure. The method illustrated in FIG. 4 may be executed by the terminal device and includes operation S410.

At operation S410, the terminal device performs a first operation based on first information.

The first information may include one or more of: NES information of a first cell, NES information of a second cell, and a first conditional handover threshold.

The first cell may be a cell where the terminal device is currently located. In other words, the first cell may be the source cell in the conditional handover. If the terminal device has a plurality of serving cells, the first cell may be any one or more of those cells. For example, if multi-carrier technology (such as carrier aggregation (CA)) is configured before the handover, the first cell may be one or more of cells corresponding to the multi-carrier. For example, the first cell may include a primary cell (PCell) and/or one or more secondary cells (SCell).

The second cell may include one or more potential target cells. For example, the second cell may be a cell that meets the conditional handover requirement, and the conditional handover requirement may be related to the wireless signal quality.

NES information may include one or more of following information of the corresponding cell: information about a power-saving time period and information about a non-power-saving time period.

During the power-saving time period of the corresponding cell, the network device of the corresponding cell may adopt any means to achieve energy-saving effects. For example, the network device may satisfy one or more of: not receiving part or all of uplink signals, not sending part or all of downlink signals, reducing transmission power, and reducing the number of multiple input multiple output (MIMO) layers for the sending. In some embodiments, the uplink signals and/or downlink signals may pertain to data, meaning that the uplink signals may be uplink data and/or the downlink signals may be downlink data. In some embodiments, the uplink signals and/or downlink signals may not include control information, reference signals, etc. For example, the uplink signals and/or downlink signals may not include one or more of random access preambles, scheduling requests (SR), synchronization signal blocks (SSB), etc. The SR is limited to request resources for emergency services and high-priority service.

It should be noted that in some cases, even if the cell is configured with NES measures of "not sending downlink data and/or not receiving uplink data," data may still be sent and received between the network device and the terminal device. For example, at an end time of the non-power-saving time period, there may still be data to be sent between the terminal device and the network. Due to various reasons, such as the small amount of the data or its high priority, the data cannot wait for a next non-power-saving time period for transmission. Therefore, the data still needs to be transmitted during the power-saving time period. The cell may be configured regarding whether to continue sending and receiving data during the power-saving time period. For example, for the first cell, it may be configured as "if the current data transmission cannot be completed, the first cell continues to transmit data to the terminal device after the end time of the non-power-saving time period" or "if the current data transmission cannot be completed, the first cell stops transmitting data to the terminal device after the end time of the non-power-saving time period."

Corresponding to the power-saving time period, during the non-power-saving time period of the corresponding cell, the network device of the corresponding cell may satisfy one or more of: receiving part or all of uplink signals that were not received during the power-saving time period, sending part or all of downlink signals that were not sent during the power-saving time period, restoring transmission power, and restoring the number of MIMO layers for the sending.

The information about the power-saving time period may include one or more of: a start time, an end time, a duration, a cycle, and an offset value, etc. The start time and/or end time may be considered as time switching moments between the non-power-saving time period and the power-saving time period, or the start time and/or end time may be regarded as state switching moments between the non-power-saving state and the power-saving state.

The information about the non-power-saving time period may include one or more of: a start time, an end time, a duration, a cycle, and an offset value, etc. The start time and/or end time may be considered as time switching moments between the non-power-saving time period and the power-saving time period, or the start time and/or end time may be regarded as state switching moments between the non-power-saving state and the power-saving state.

It should be noted that for the first cell, the terminal device may determine the power-saving time period and/or non-power-saving time period based on a system frame number (SFN) of the first cell. For the second cell, the terminal device may determine the power-saving time period and/or non-power-saving time period based on the SFN of the first cell or based on the SFN of the second cell.

It should be understood that the start time of the power-saving time period and the end time of the non-power-saving time period may represent the same time. In other words, the start time of the power-saving time period may represent the end time of the non-power-saving time period, or the end time of the non-power-saving time period may represent the start time of the power-saving time period. Similarly, the start time of the non-power-saving time period and the end time of the power-saving time period may represent the same time. In other words, the start time of the non-power-saving time period may represent the end time of the power-saving time period, or the end time of the power-saving time period may represent the start time of the non-power-saving time period.

It should be noted that if there are a plurality of separately configured power-saving time periods, the aforementioned start time may be determined based on any (e.g., the earliest or latest) start time from the plurality of power-saving time periods, or the end time may be determined based on any (e.g., the earliest or latest) end time from the plurality of power-saving time periods. For example, if the first cell is configured with NES measures of "not receiving uplink data" and "not sending downlink data," the end time may be an end time of "not receiving uplink data" or an end time of "not sending downlink data."

It should be noted that if the first cell includes a plurality of cells, the start time of the power-saving time period for the first cell may be determined based on any (e.g., the earliest or latest) start time from the plurality of power-saving time periods of the plurality of cells, or the end time of the power-saving time period for the first cell may be determined based on any (e.g., the earliest or latest) end time from the plurality of power-saving time periods of the plurality of cells. For example, if the terminal device is configured with CA before the handover, the start time of the power-saving time period for the first cell may be the latest one of start times from the power-saving time periods of a plurality of secondary cells. In other words, the start time of the power-saving time period for the first cell may be a time when the plurality of secondary cells enter a power-saving state. Alternatively, if the terminal device is configured with CA before the handover, the end time of the power-saving time period for the first cell may be the latest one of end times from the power-saving time periods of the plurality of secondary cells. In other words, the end time of the power-saving time period for the first cell may be a time when the plurality of secondary cells enter a non-power-saving state.

It should be noted that in a case that the second cell includes a plurality of potential target cells, the NES information of the second cell may include part or all of the NES information of each potential target cell.

The first conditional handover threshold may be related to a conditional handover requirement. Taking the conditional handover requirement being related to the wireless signal quality as an example, the second cell meets the conditional handover requirement when the wireless signal quality of the second cell is greater than or equal to the first conditional handover threshold and/or the wireless signal quality of the first cell is less than the first conditional handover threshold.

It should be noted that the first conditional handover threshold may include one or more thresholds. In a case that the first conditional handover threshold includes a plurality of thresholds, the terminal device may select at least one threshold from the plurality of thresholds for use. For example, the terminal device may select one from the plurality of thresholds as a reference for determining whether the potential target cell meets the conditional handover requirement.

The first conditional handover threshold may be related to an NES state of the first cell and/or an NES state of the second cell. The first conditional handover threshold may include one or more of: a second conditional handover threshold when the first cell is in a power-saving state, a third conditional handover threshold when the first cell is in a non-power-saving state, a fourth conditional handover threshold when the second cell is in the power-saving state, and a fifth conditional handover threshold when the second cell is in the non-power-saving state.

In some embodiments, the first conditional handover threshold may include one or both of: a value of the first conditional handover threshold and a first difference between the first conditional handover threshold and a reference threshold. In other words, the value of the first conditional handover threshold may be directly indicated, and/or the first difference may indirectly indicate the first conditional handover threshold. After the terminal device acquires the first difference, it may determine the first conditional handover threshold based on the first difference and the reference threshold. For example, the value of the first conditional handover threshold may be equal to a sum or difference of the reference threshold and the first difference.

Optionally, the reference threshold may satisfy one or more of: configured by the network device, pre-configured, or specified by a protocol.

Optionally, the first difference may satisfy one or more of: configured by the network device, pre-configured, or specified by the protocol.

It should be noted that when the first conditional handover threshold includes the plurality of thresholds, the plurality of thresholds may be configured separately or simultaneously.

The first operation may be an operation related to conditional handover. For example, the first operation may include one or more of: determining a cell that meets the conditional handover requirement, determining a first time for a handover from the first cell to the second cell, and measuring a third cell within a first time period between a second time and the first time to determine whether the third cell meets the conditional handover requirement. The second time is a time when the terminal device determines that the second cell meets the conditional handover requirement.

Thus, based on the first information, when the terminal device executes operations related to conditional handover, it may take the first information into account, thereby improving the conditional handover process to balance energy-saving needs of the network device and handover needs of the terminal device.

The first operation is described in detail below through examples.

In some embodiments, the first operation may include determining the cell that meets the conditional handover requirement.

In some implementations, the terminal device may determine the cell that meets the conditional handover requirement based on the first conditional handover threshold.

For example, the first conditional handover threshold may include a first absolute threshold and a second absolute threshold. Under the following conditions, i.e., the wireless signal quality of the first cell is below the first absolute threshold and the wireless signal quality of the second cell is above the second absolute threshold, the second cell is considered the cell that meets the conditional handover requirement.

For another example, the first conditional handover threshold may include a relative threshold. Under the following conditions, i.e., a difference between the wireless signal quality of the second cell and the wireless signal quality of the first cell is greater than the relative threshold, the second cell is considered the cell that meets the conditional handover requirement.

For another example, the first conditional handover threshold may include the second conditional handover threshold when the first cell is in the power-saving state. In other words, when the first cell is in the power-saving state, whether the second cell meets the conditional handover requirement may be determined based on the first conditional handover threshold. For example, when the first cell is in the power-saving time period, the conditional handover requirement may be that "the wireless signal quality of the first cell is below the second conditional handover threshold, and the wireless signal quality of the second cell is above the second absolute threshold." Alternatively, when the first cell is in the power-saving time period, the conditional handover requirement may be that "the difference between the wireless signal quality of the second cell and the wireless signal quality of the first cell is greater than the second conditional handover threshold."

For another example, the first conditional handover threshold may include the third conditional handover threshold when the first cell is in the non-power-saving state. In other words, when the first cell is in the non-power-saving state, whether the second cell meets the conditional handover requirement may be determined based on the third conditional handover threshold. For example, when the first cell is in the non-power-saving time period, the conditional handover requirement may be that "the wireless signal quality of the first cell is below the third conditional handover threshold, and the wireless signal quality of the second cell is above the second absolute threshold." Alternatively, when the first cell is in the non-power-saving time period, the conditional handover requirement may be that "the difference between the wireless signal quality of the second cell and the wireless signal quality of the first cell is greater than the third conditional handover threshold."

For another example, the first conditional handover threshold may include the fourth conditional handover threshold when the second cell is in the power-saving state. In other words, when the second cell is in the power-saving state, whether the second cell meets the conditional handover requirement may be determined based on the fourth conditional handover threshold. For example, when the second cell is in the power-saving time period, the conditional handover requirement may be that "the wireless signal quality of the first cell is below the first absolute threshold, and the wireless signal quality of the second cell is above the fourth conditional handover threshold." Alternatively, when the second cell is in the power-saving time period, the conditional handover requirement may be that "the difference between the wireless signal quality of the second cell and the wireless signal quality of the first cell is greater than the fourth conditional handover threshold."

For another example, the first conditional handover threshold may include the fifth conditional handover threshold when the second cell is in the non-power-saving state. In other words, when the second cell is in the non-power-saving state, whether the second cell meets the conditional handover requirement may be determined based on the fifth conditional handover threshold. For example, when the second cell is in the non-power-saving time period, the conditional handover requirement may be that "the wireless signal quality of the first cell is below the first absolute threshold, and the wireless signal quality of the second cell is above the fifth conditional handover threshold." Alternatively, when the second cell is in the non-power-saving time period, the conditional handover requirement may be that "the difference between the wireless signal quality of the second cell and the wireless signal quality of the first cell is greater than the fifth conditional handover threshold."

In some embodiments, the first operation may include determining or predicting the first time for the handover from the first cell to the second cell. Alternatively, the first time may also be referred to as a handover timing. The first time may be a time when the terminal device initiates random access (RA) to the second cell or a time when the terminal device begins the handover to the second cell.

Based on the first operation, the terminal device may not immediately execute the handover to the second cell at the time it determines that the second cell meets the conditional handover requirement, but rather wait until the first time to execute the handover. Therefore, the terminal device may determine an appropriate handover timing, thereby improving communication performance. For example, if the second cell is currently in the power-saving time period, it may adopt the NES measure of "not sending downlink data and/or not receiving uplink data." If the terminal device immediately executes the handover to the second cell, data cannot be transmitted immediately in the second cell, resulting in an additional data transmission delay. This delay may cause the data transmission to fail to meet quality of service (QoS) requirements corresponding to the radio bearer (RB). However, based on the present disclosure, the terminal device may avoid immediately executing the handover to the second cell and determine an appropriate handover timing to meet the QoS requirements for data transmission. Alternatively, if the first cell is currently in the non-power-saving time period and adopts the NES measure of "not sending downlink data and/or not receiving uplink data," the first cell will focus on executing data transmission with the terminal device during the non-power-saving time period. If the terminal device executes the handover during a concentrated data transmission period, the following situation may arise: the data transmitted before and after the handover needs to maintain continuity, meaning that the data transmitted before the handover needs to be combined with the data transmitted after the handover to be correctly parsed. In this case, to correctly parse the data, the data needs to be transmitted between the first cell and the second cell. Considering the NES measures, concentrated data transmission may lead to a large amount of data that needs to be transmitted between the first cell and the second cell, complicating the handover process. However, based on the present disclosure, the terminal device may avoid immediately executing the handover to the second cell and determine the appropriate handover timing, thereby avoiding inter-cell data transmission and simplifying the handover process.

It should be understood that the technical solution of setting corresponding conditional handover thresholds under different NES states may also achieve similar technical effects. For example, the second conditional handover threshold when the first cell is in the power-saving state may be lower than the third conditional handover threshold when the first cell is in the non-power-saving state. This means that the terminal device finds it easier to execute the handover to other cells when the first cell is in the power-saving state, and the terminal device finds it more difficult to execute the handover to other cells when the first cell is in the non-power-saving state. Therefore, the present disclosure may reduce the probability of the terminal device performing conditional handover when the first cell is in the non-power-saving state, thereby, to a certain extent, avoiding issues caused by the transmission of a large amount of data between the first and second cells due to the handover when the first cell in the non-power-saving state. Alternatively, the fourth conditional handover threshold when the second cell is in the power-saving state may be higher than the fifth conditional handover threshold when the second cell is in the non-power-saving state. This means that the terminal device finds it easier to execute the handover to the second cell when the second cell is in the non-power-saving state, and the terminal device finds it more difficult to execute the handover to the second cell when the second cell is in the power-saving state. Thus, the present disclosure may reduce the probability of the terminal device executing the handover to the second cell when the second cell is in the power-saving state, thereby, to a certain extent, avoiding issues such as data transmission delays caused by the handover to the second cell when the second cell is in the power-saving state.

In some embodiments, the first time may be determined based on one or more of: the first information, the second time, and whether the terminal device has data to send and/or receive at the second time.

As mentioned above, the second time is the time when the terminal device determines that the second cell meets the conditional handover requirement. Alternatively, the second time may be the time when the second cell meets the conditional handover requirement.

As a possible implementation, the first information may be used to indicate the power-saving time period of the first cell. If the second time is within the power-saving time period of the first cell, the first time may be determined based on the second time. In other words, if the time when the second cell meets the conditional handover requirement is within the power-saving time period of the source cell, the time for the handover to the second cell may be determined based on the time when the second cell meets the conditional handover requirement.

For example, the first time may be equal to the second time. In other words, if the time when the second cell meets the conditional handover requirement is within the power-saving time period of the source cell, the terminal device may immediately execute the handover to the second cell.

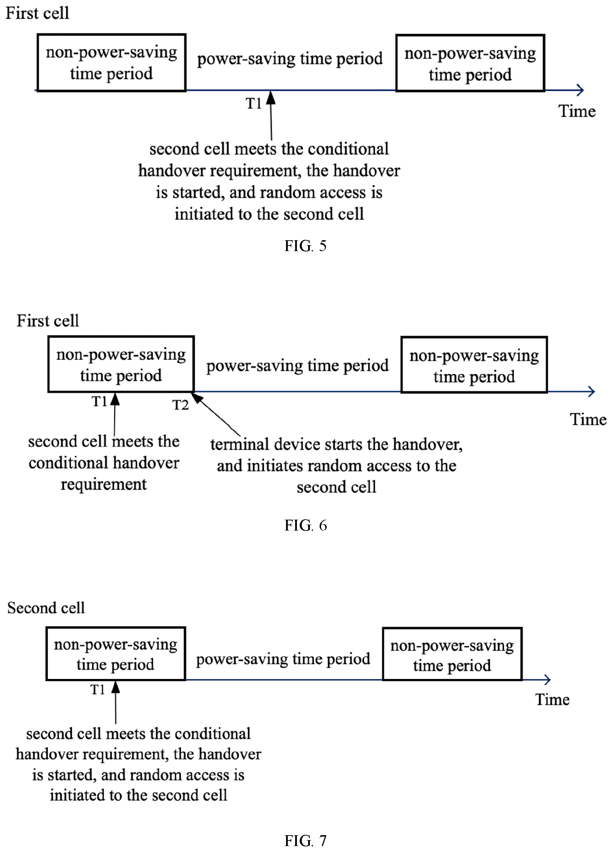

FIG. 5 is an example diagram of an NES configuration for the first cell. As shown in FIG. 5, at time T1, the second cell meets the conditional handover requirement. That is, T1 is the second time. Since T1 falls within the power-saving time period of the first cell, the terminal device may begin executing the conditional handover process for the second cell at T1.

For the source cell, if the second time is within the power-saving time period, there may not be a large amount of data transmitted between the terminal device and the source cell. Even if the terminal device immediately executes the handover to the second cell, there is no need for data transmission between the first and second cells. Therefore, in this case, the terminal device may execute the handover immediately to allow the second cell to serve the terminal device as soon as possible.

As a possible implementation, the first information may be used to indicate the non-power-saving time period of the first cell. If the second time falls within the non-power-saving time period of the first cell, the first time may be determined based on the end time of the non-power-saving time period of the first cell. In other words, if the time when the second cell meets the conditional handover requirement is within the non-power-saving time period of the source cell, the time for initiating random access to the second cell may be determined based on the end time of the non-power-saving time period of the source cell.

For example, the first time may be equal to or later than the end time of the non-power-saving time period of the first cell. In other words, if the time when the second cell meets the conditional handover requirement is within the non-power-saving time period of the source cell, the terminal device may wait until the non-power-saving time period of the first cell ends before executing the handover to the second cell.

If the terminal device executes the handover to the second cell during the non-power-saving time period of the first cell, the aforementioned issue of needing data transmission between the first and second cells may arise. Based on the present disclosure, the terminal device may wait until the non-power-saving time period of the first cell ends before executing the handover to the second cell, thereby minimizing the occurrence of the aforementioned issues.

FIG. 6 is another example diagram of an NES configuration for the first cell. As shown in FIG. 6, the second cell meets the conditional handover requirement at time T1. The time T1 falls within the non-power-saving time period of the first cell, and the end time of the non-power-saving time period is T2. The terminal device may start to initiate random access to the second cell at T2.

It should be noted that if the terminal device has configured CA before the handover and has configured NES for both a primary cell and a secondary cell, the terminal device may determine the first time based on NES information of the primary cell or NES information of the secondary cell. For example, the terminal device may use an end time of a non-power-saving time period of the primary cell as the second time, or it may use an end time of a non-power-saving time period of the secondary cell as the second time.

In some embodiments, the terminal device may determine the first time based on whether there is data to send and/or receive at the second time.

Optionally, if the terminal device has no data to send and/or receive at the second time, the first time may be determined based on the second time. If there is no data to send and/or receive at the second time, the terminal device may determine the first time based on the second time without considering whether the first cell is in the non-power-saving state. For example, if the terminal device has no data to send and/or receive at the second time, even if the second time falls within the non-power-saving time period of the first cell, the terminal device may determine the first time based on the second time, such as immediately executing the handover to the second cell.

Taking the scenario shown in FIG. 5 as an example, if the second cell meets the conditional handover requirement and the terminal device has no data to send and/or receive at time T1, the terminal device may start to initiate random access to the second cell at time T1.

It should be understood that if the terminal device has no data to transmit, there is no issue of the first cell transmitting data to the second cell after the handover. Therefore, based on the present disclosure, the terminal device may execute the handover as early as possible, thereby promptly executing the handover to a more suitable cell.

Optionally, if the terminal device has data to send and/or receive at the second time, the terminal device may delay the time for the handover to the second cell. Optionally, the first time may be determined based on an end time of sending and/or receiving of the data. For example, the first time may be equal to or later than the end time of the sending and/or receiving of the data. That is to say, the terminal device may wait until the sending and/or receiving of the data is completed before initiating random access to the second cell. For example, the terminal device may initiate random access to the second cell immediately after the sending and/or receiving of the data is completed.

In some embodiments, the situation where the terminal device has data to send and/or receive at the second time and the second time falls within the non-power-saving time period of the first cell may be divided into two cases: Case 1 and Case 2.

In Case 1, the end time of the sending and/or receiving of the data is earlier than or equal to the end time of the non-power-saving time period of the first cell. In Case 1, the first time may be equal to or later than the end time of the sending and/or receiving of the data.

In Case 2, the end time of the sending and/or receiving of the data is later than the end time of the non-power-saving time period of the first cell. Case 2 may further be subdivided into Case 2.1 and Case 2.2. In Case 2.1, the terminal device determines that "if the current data transmission cannot be completed, the first cell may continue to transmit data to the terminal device after the end time of the non-power-saving time period of the first cell." In Case 2.1, the first time may be later than or equal to the end time of the sending and/or receiving of the data. In Case 2.2, the terminal device determines that "if the current data transmission cannot be completed, the first cell may stop transmitting data to the terminal device after the end time of the non-power-saving time period of the first cell." In Case 2.2, the first time may be equal to the end time of the non-power-saving time period of the first cell.

It should be noted that the terminal device may determine whether Case 2 belongs to Case 2.1 or Case 2.2 based on a protocol specification or one or more items in configuration information of the first cell.

As mentioned above, the first time may be determined based on the NES of the first cell. The following illustrates that the first time may be determined based on the NES information of the second cell through the embodiments.

In some embodiments, if the second time falls within the non-power-saving time period of the second cell, the first time may be determined based on the second time. For example, the first time may be equal to the second time. That is to say, if it is determined that the second cell meets the conditional handover requirement during the non-power-saving time period of the second cell, the terminal device may immediately execute the handover to the second cell.

As shown in FIG. 7, at time T1, the second cell meets the conditional handover requirement, and T1 falls within the non-power-saving time period of the second cell. Therefore, the terminal device may immediately execute the handover to the second cell at T1.

In some embodiments, if the second time falls within the power-saving time period of the second cell, the first time may be determined based on the second time and the start time of the non-power-saving time period of the second cell. It should be understood that if it is determined that the second cell meets the conditional handover requirement during the power-saving time period of the second cell, the terminal device may not immediately execute the handover to the second cell. For example, the terminal device may wait for a period of time before executing the handover to the second cell.

Optionally, the first time may be earlier than the start time of the non-power-saving time period of the second cell. For example, the first time may be a randomly selected time between the second time and the start time of the non-power-saving time period of the second cell.

It should be understood that after the terminal device successfully executes the handover to the second cell, the data is thus able to be transmitted between the terminal device and the network device. The handover process requires some time. That is to say, there is a period of time from when the terminal device starts the handover to the second cell until it is able to send and/or receive data within the second cell. The first time being earlier than the start time of the non-power-saving time period of the second cell allows the terminal device to execute the handover process before the start time of the non-power-saving time period of the second cell, thus enabling data transmission and reception in the second cell as early as possible.

For example, the first time is within a first duration between the start time of the non-power-saving time period of the second cell. Alternatively, a time difference between the first time and the start time of the non-power-saving time period of the second cell may be less than or equal to the first duration. The first duration may satisfy one or more of: configured by the network device, pre-configured, or specified by the protocol.

In the case that the first duration is configured by the network device, the network device may be a network device corresponding to the first cell or a network device corresponding to the second cell. Additionally, the network device may configure the first duration for the terminal device through RRC messages such as conditional handover commands, or the network device corresponding to the first cell may configure the first duration for the terminal device through MAC CE, DCI, and other messages.

Optionally, the first duration may be a duration required for the terminal device to complete random access (also referred to as RA threshold). That is to say, the terminal device may start executing random access before the start time of the non-power-saving time period of the second cell based on the duration required to complete random access, in order to begin data transmission and reception as early as possible during the non-power-saving time period of the second cell. For example, the time difference between the first time and the start time of the non-power-saving time period of the second cell is equal to the first duration, then the terminal device may immediately enter the non-power-saving time period of the second cell after completing random access in the second cell, thus enabling immediate data transmission and reception.

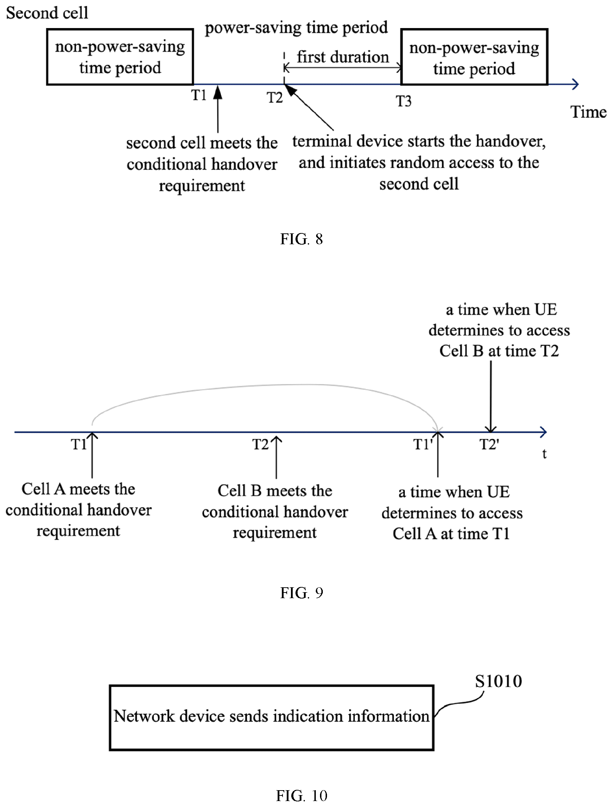

As shown in FIG. 8, the second cell meets the conditional handover requirement at time T1, and T1 falls within the power-saving time period of the second cell. The terminal device executes the handover to the second cell at time T2, and T2 is a time reached by going back the first duration from the start time of the non-power-saving time period of the second cell. The first duration is the RA threshold, which is a time length required to complete random access.

In some embodiments, the terminal device may execute the first operation at a first change time or a second change time. The first change time refers to a time when the NES state of the first cell changes, and the second change time refers to a time when the NES state of the second cell changes. The NES state change time may include a time when the power-saving state changes to the non-power-saving state, or a time when the non-power-saving state changes to the power-saving state. That is to say, the terminal device may wait for a change in the NES state of either the first cell or the second cell before determining the timing for the handover to the second cell. For example, the handover to the second cell may occur at the first change time or the second change time.

It should be noted that in the scenarios described above, the terminal device may choose to immediately execute the handover to the second cell or choose to execute the handover to the second cell at another time based on the above embodiments. The specific behavior of the terminal device may be defined by the protocol, configured by the network device, or determined based on the implementation of the terminal device. If the specific behavior of the terminal device is configured by the network device, the network device may correspond to the first cell or the second cell. In other words, either the first cell or the second cell is able to determine the behavior of the terminal device. If the behavior of the terminal device is determined by the second cell, corresponding configuration information may be forwarded to the terminal device by the network device corresponding to the first cell. Additionally, if the specific behavior of the terminal device is configured by the network device, the corresponding configuration information may be carried by one or more of: the RRC message, MAC CE, and DCI.

The above embodiments may be implemented independently or in combination. That is to say, the first information may include only the NES information of the first cell or the NES information of the second cell. Alternatively, the first information may include both the NES information of the first cell and the NES information of the second cell. That is, the terminal device may execute the first operation based solely on the NES information of the first cell or the NES information of the second cell, or it may execute the first operation based on both the NES information of the first cell and the NES information of the second cell.

For example, in the case where the first operation is executed based on both the NES information of the first cell and the NES information of the second cell, the terminal device may execute the first operation at the first change time or the second change time. The following details are explained in conjunction with Table 1. At the second time, the NES states of the first cell and the second cell may include one of combinations shown in Table 1.

**Table 1**

| | NES State of First Cell | NES State of Second Cell |
|---|---|---|
| Combination 1 | power-saving state | non-power-saving state |
| Combination 2 | power-saving state | power-saving state |
| Combination 3 | non-power-saving state | non-power-saving state |
| Combination 4 | non-power-saving state | power-saving state |

For Combination 1, the first cell is in a power-saving state, and the second cell is in a non-power-saving state. For example, the first cell cannot transmit data or may only transmit data in a restricted state (such as the number of MIMO layers is limited), while the second cell is able to transmit data normally. In the case of Combination 1, the terminal device may immediately execute the handover to the second cell. That is, the first time may be equal to the second time.

For Combination 2, the terminal device may choose to immediately execute the handover to the second cell. Alternatively, the terminal device may choose to wait for a change in the NES state of either cell before determining whether to execute the handover to the second cell. Alternatively, the terminal device may randomly wait for a period of time before determining whether to immediately execute the handover to the second cell, thereby preventing a plurality of terminal devices from simultaneously executing conditional handover.

For Combination 3, the terminal device may choose to immediately execute the handover to the second cell. Alternatively, the terminal device may choose to wait for a change in the NES state of either cell before determining whether to execute the handover to the second cell. Alternatively, the terminal device may randomly wait for a period of time before determining whether to immediately execute the handover to the second cell, thereby preventing a plurality of terminal devices from simultaneously executing conditional handover.

For Combination 4, the terminal device may choose to transmit data in the first cell, and wait until the first cell enters the power-saving state or until the data transmission of the terminal device is completed before executing the handover to the second cell.

In some embodiments, the first operation may include that the terminal device measures a third cell within a first time period between the second time and the first time to determine whether the third cell meets the conditional handover requirement. That is to say, during the first time period, the terminal device may further determine whether other cells, in addition to the second cell, meet the conditional handover requirement, thereby selecting a more suitable target cell for the handover.

In some embodiments, the terminal device may not to measure the third cell in the first time period. That is to say, during the first time period, the terminal device may not determine whether other cells, in addition to the second cell, meet the conditional handover requirement and may execute the handover to the second cell at the first time. It should be understood that once the terminal device has selected a target cell, it may refrain from further measurements, thereby saving the energy consumption of the terminal device.

Optionally, whether the terminal device measures the third cell during the first time period may be indicated by first indication information. The first indication information may satisfy one or more of: specified by the protocol, configured by the network device, and pre-configured. If the first indication information is configured by the network device, the terminal device may receive the first indication information sent by the network device. The network device may correspond to either the first cell or the second cell. If the first configuration information is determined by the second cell, it may be forwarded to the terminal device by the network device corresponding to the first cell. Additionally, if the first configuration information is configured by the network device, it may be carried by one or more of: the RRC message, MAC CE, and DCI. If the first configuration information is carried in the RRC message, the RRC message may be a conditional handover command.

In some embodiments, the same first configuration information may be configured for all potential target cells. For example, if any potential target cell meets the conditional handover requirement, the terminal device may refrain from measuring other potential target cells. Alternatively, regardless of which potential target cell meets the conditional handover requirement, the terminal device is required to measure other potential target cells.

In some embodiments, different first configuration information may be configured for different potential target cells. For example, if a first potential target cell meets the conditional handover requirement, the terminal device may continue to determine whether other potential target cells meet the conditional handover requirement; and if a second potential target cell meets the conditional handover requirement, the terminal device may refrain from determining whether other potential target cells meet the conditional handover requirement. The first potential target cell or the second potential target cell may be the second cell described above.

In some embodiments, the third cell may meet the conditional handover requirement. In this case, the terminal device may determine either the second cell or the third cell as an accessed cell or target cell based on one or more of: the first time, the second time, a third time, and a fourth time. That is to say, the terminal device may select which cell to actually execute the handover to based on one or more of the above information. The third time refers to a handover time from the first cell to the third cell, and the fourth time refers to a time when the terminal device determines that the third cell meets the conditional handover requirement.

For example, in a case that the first time is earlier than or equal to the third time, the terminal device may choose to execute the handover to the second cell; and/or, in a case that the first time is later than or equal to the third time, the terminal device may choose to execute the handover to the third cell. In other words, the terminal device may select the cell whose access time or handover time is closest to the current time as the accessed cell.

For another example, in a case that the second time is earlier than or equal to the fourth time, the terminal device may choose to execute the handover to the second cell; and/or, in a case that the second time is later than or equal to the fourth time, the terminal device may choose to execute the handover to the third cell. In other words, the terminal device may select a cell which most recently satisfies the conditional handover requirement as the accessed cell.

It should be noted that both the first time and the third time are predicted times, meaning that the first time is a time predicted by the terminal device for the handover from the first cell to the second cell, and the third time is a time predicted by the terminal device for the handover from the first cell to the third cell. Whether the handover is executed at the first time or the third time is determined based on the terminal device's choice of which cell to execute the handover to. For example, if the terminal device chooses to execute the handover to the second cell, it may execute the handover to the second cell at the first time and may not execute the handover to the third cell at the third time. Similarly, if the terminal device chooses to execute the handover to the third cell, it may execute the handover to the third cell at the third time and may not execute the handover to the second cell at the second time.

The following illustrates with the scenario shown in FIG. 9.

As shown in FIG. 9, at time T1, the terminal device determines that Cell A (i.e., the second cell) meets the conditional handover requirement and determines to access Cell A at time T1'. Subsequently, the terminal device measures other potential target cells or only measures other potential target cells with the priority higher than Cell A, and determines that Cell B (i.e., the third cell) meets the conditional handover requirement at time T2. The terminal device further determines to access Cell B at time T2'. The terminal device may choose to access Cell A at time T1' (selecting the cell with the nearest access time as the target cell), or it may choose to access Cell B at time T2' (selecting the cell that most recently satisfies the conditional handover requirement as the accessed cell).

It should be noted that the terminal device may further determine whether to access the second cell or the third cell based on other configuration information. Other configuration information may include priority information related to the conditional handover. For example, the terminal device may compare the priorities of the second cell and the third cell and choose to access the cell with the higher priority. Other configuration information may be, for example, configured by the network device.

The present disclosure further provides a method for communication as shown in FIG. 10. The method illustrated in FIG. 10 may be executed by a network device, which may correspond to either the first cell or the second cell. The method shown in FIG. 10 may include operation S1010.

At operation S1010, the network device sends indication information.

Optionally, the network device may be a first network device, which corresponds to the first cell. In other words, the first network device may be a network device (source network device) corresponding to the source cell. In this case, the first network device may send the indication information to the terminal device.

Optionally, the network device may be a second network device, which corresponds to the second cell. In other words, the first network device may be a network device (target network device) corresponding to the target cell. In this case, the second network device may send the indication information to the first network device, and the first network device then forwards the indication information to the terminal device. Alternatively, the second network device may directly send the indication information to the terminal device.

The indication information may include second indication information, and the second indication information may be used to indicate the first information.

The indication information may further include any information configured by the network device as described above. For example, the indication information may include the first indication information mentioned above.

The NES information of the second cell may be indicated through third indication information. The first network device may receive the third indication information. The second network device may send the third indication information.

In some embodiments, the second network device may actively send the third indication information. Alternatively, the first network device may send a request message to request the second network device to send the third indication information.

For example, the second network device may provide the third indication information to the first network device when an inter-cell interface is established. After the cell interface is established, if the NES information of the second cell is updated, the second network device may promptly notify the first network device of the third indication information. It should be noted that in this embodiment, the process of exchanging the third indication information between the two network devices may not occur through the handover preparation process of the terminal device.

For another example, the second network device may send the third indication information to the first network device during a handover preparation process of the network device.

For another example, the second network device may send the third indication information to the first network device in response to the request message from the first network device during the handover preparation process.

The second network device may independently decide whether to send the third indication information. That is, providing the third indication information to the first cell is optional. For example, in a case that the first network device sends the request message, the second network device may also choose not to send the third indication information.

In some embodiments, if the second network device does not send the third indication information, it may indicate that the second cell has not adopted NES measures. Alternatively, if the second network device does not send the third indication information, it may indicate that the second cell has adopted NES measures but does not wish for the NES information of the second cell to affect the first operation.

In some embodiments, if the second network device sends the third indication information, it may indicate that the second cell has adopted NES measures.

As mentioned above, the NES information may include information about the power-saving time period and/or the non-power-saving time period. The time period may be represented by one or more of a cycle, an offset, a duration, etc. The terminal device may infer "time period information with the SFN of the second cell as a reference" based on the received indication information.

The first network device may send the received third indication information to the terminal device through indication information.

In some embodiments, the first network device may send unprocessed third indication information to the terminal device. That is, the indication information may include the unprocessed third indication information. In other words, the first network device may transparently transmit the received third indication information to the terminal device. It should be understood that transparent transmission may simplify the implementation of the first network device and reduce the computational load of the first network device.

In some embodiments, the first network device may process (e.g., parse) the received third indication information and send the processed third indication information (i.e., the NES information of the second cell obtained through parsing) to the terminal device through indication information. If the first network device parses the third indication information, it may send all NES information or only a portion of the NES information to the terminal device. For example, after parsing the third indication information, the first network device may extract and send a portion of the NES information related to the CHO to the terminal device while not sending other NES information. The portion of NES information related to the CHO may include one or more of: "a time period during which the second cell does not send downlink data," "a time period during which the second cell does not receive uplink data," "time periods during which the second cell reduces transmission power," and "time periods during which the second cell adjusts a phase of sent data."

Thus, it is seen that processing the third indication information by the first network device before sending it may reduce the data amount of indication information sent by the first network device to the terminal device, thereby saving communication resources.

In some embodiments, if the NES information of the first cell and/or the NES information of the second cell changes, the first network device may send indication information to the terminal device. If the NES information of the first cell and/or the NES information of the second cell does not change, the first network device may not send indication information to the terminal device.

For example, in a case that the NES information of the second cell changes, the first network device may send indication information to the terminal device to indicate updated NES information of the second cell.

For example, if the first network device transparently transmits the third indication information to the terminal device, it may notify the terminal device of the updated NES information of the second cell through a conditional handover message. If the first network device parses the third indication information before transmitting it to the terminal device, the first network device may notify the terminal device of the updated NES information of the second cell through the conditional handover message, or other RRC messages. For example, the first network device may notify the second cell of the updated NES configuration through Layer 1 (L1) or Layer 2 (L2) indication messages. The L1 and L2 indication messages may include, for example, MAC CE and/or DCI, etc. In other words, the indication information may be carried in one or more of the RRC message, MAC CE, and DCI. The RRC message may be the conditional handover message.

The method embodiments of the present disclosure are described in detail above, and the apparatus embodiments of the present disclosure are described in detail below. It should be understood that descriptions of the method embodiments correspond to descriptions of the apparatus embodiments, and therefore, reference may be made to the foregoing method embodiments for parts that are not described in detail.

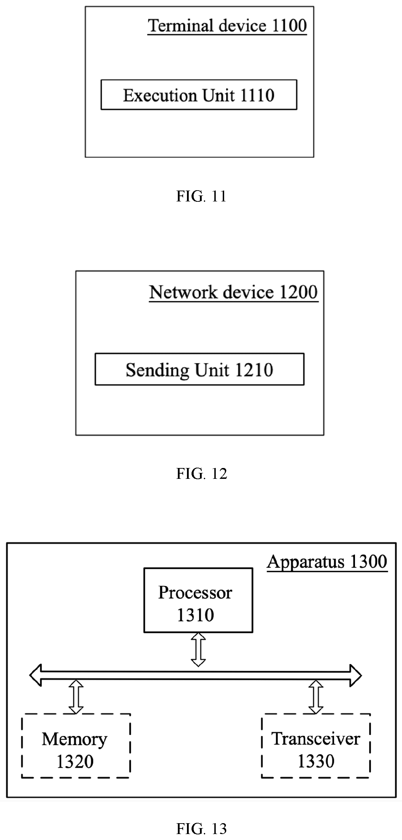

FIG. 11 is a schematic structural diagram of a terminal device 1100 according to an embodiment of the present disclosure. The terminal device 1100 may include an execution unit 1110.

The execution unit 1110 is configured to execute a first operation based on first information. The first information includes one or more of: network energy saving (NES) information of a first cell where the terminal device is located, NES information of a second cell, and a first conditional handover threshold related to an NES state of the first cell and/or an NES state of the second cell. The first operation includes one or more of: determining a cell that meets a conditional handover requirement; determining a first time for a handover from the first cell to the second cell; and measuring a third cell in a first time period between a second time and the first time to determine whether the third cell meets the conditional handover requirement, where the second time is a time when the terminal device determines that the second cell meets the conditional handover requirement.

In some embodiments, the first conditional handover threshold includes one or both of: a value of the first conditional handover threshold; and a first difference between the first conditional handover threshold and a reference threshold.

In some embodiments, the reference threshold satisfies one or more of: configured by a network device, pre-configured, and specified by a protocol.

In some embodiments, the first conditional handover threshold satisfies one or more of: configured by a network device, pre-configured, and specified by a protocol.

In some embodiments, the first conditional handover threshold includes one or more of: a second conditional handover threshold when the first cell in a power-saving state; a third conditional handover threshold when the first cell in a non-power-saving state; a fourth conditional handover threshold when the second cell in the power-saving state; and a fifth conditional handover threshold when the second cell in the non-power-saving state.

In some embodiments, the first time is determined based on one or more of: the first information; the second time; and whether the terminal device has data to send and/or receive at the second time.

In some embodiments, the first information is used to indicate a power-saving time period of the first cell, and the first time is determined according to the second time if the second time is within the power-saving time period of the first cell.

In some embodiments, the first information is used to indicate a non-power-saving time period of the first cell, and the first time is determined according to an end time of the non-power-saving time period of the first cell if the second time is within the non-power-saving time period of the first cell.

In some embodiments, the first time is determined according to an end time of sending and/or receiving of the data if the terminal device has the data to send and/or receive at the second time.

In some embodiments, the first time is determined according to the second time if the terminal device has no data to send and/or receive at the second time.

In some embodiments, the first information is used to indicate a non-power-saving time period of the second cell, and the first time is determined according to the second time if the second time is within the non-power-saving time period of the second cell.

In some embodiments, the first information is used to indicate a power-saving time period of the second cell, and the first time is determined according to the second time and a start time of a non-power-saving time period of the second cell if the second time is within the power-saving time period of the second cell.

In some embodiments, the first time is within a first duration before a start time of the non-power-saving time period of the second cell.

In some embodiments, the first duration is a duration required for the terminal device to complete random access.

In some embodiments, the time difference is equal to the first duration.

In some embodiments, the first duration satisfies one or more of: configured by a network device, and specified by a protocol.

In some embodiments, the NES state of the first cell changes at a first change time, and the NES state of the second cell changes at a second change time; the executing, by the terminal device, the first operation based on the first information includes: executing, by the terminal device, the first operation based on the first information at the first change time or the second change time.

In some embodiments, the terminal device 1100 is further configured to: receive first indication information. The first indication information is used to indicate whether the terminal device needs to measure the third cell in the first time period.

In some embodiments, in a case that the third cell meets the conditional handover requirement, the terminal device determines the second cell or the third cell as an accessed cell according to one or more of: the first time; the second time; a third time, where the third time is a handover time from the first cell to the third cell; and a fourth time, where the fourth time is a time when the terminal device determines that the third cell meets the conditional handover requirement.

In some embodiments, the terminal device 1100 is further configured to: receive second indication information sent by the network device. The second indication information is used to indicate the first information.

In optional embodiments, the execution unit 1110 may be a transceiver 1330. The network device 1200 may further include a processor 1310 and a memory 1320, as specifically shown in FIG. 13.

FIG. 12 is a schematic structural diagram of a network device 1200 according to an embodiment of the present disclosure. The network device 1200 may include a sending unit 1210.

The sending unit 1210 is configured to send indication information. The indication information includes second indication information, and the second indication information is used to indicate first information. The first information includes one or more of: NES information of a first cell where a terminal device is located, NES information of a second cell, and a first conditional handover threshold related to an NES state of the first cell and/or an NES state of the second cell.

In some embodiments, in a case that the network device corresponds to the first cell, the network device 1200 is further configured to: receive, by the network device corresponding to the first cell, third indication information sent by a network device corresponding to the second cell. The third indication information is used to indicate the NES information of the second cell.

In some embodiments, the network device 1200 is further configured to: send, by the network device corresponding to the first cell, a request message to request to send the third indication information.

In some embodiments, the indication information includes unprocessed third indication information or processed third indication information.

In optional embodiments, the sending unit 1210 may be a transceiver 1330. The network device 1200 may further include a processor 1310 and a memory 1320, as specifically shown in FIG. 13.

FIG. 13 is a schematic structural diagram of an apparatus for communication according to an embodiment of the present disclosure. The dashed line in FIG. 13 indicates that the unit or module is optional. The apparatus 1300 may be configured to implement the method described in the foregoing method embodiments. The apparatus 1300 may be one or more of a chip, a terminal device, or a network device.

The apparatus 1300 may include one or more processors 1310, and the processor 1310 may support the apparatus 1300 to implement the method described in the foregoing method embodiments. The processor 1310 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 1300 may further include one or more memories 1320 storing a program, and the program may be executed by the processor 1310 to cause the processor 1310 to perform the method described in the foregoing method embodiments. The memory 1320 may be independent of the processor 1310 or may be integrated into the processor 1310.

The apparatus 1300 may further include a transceiver 1330, and the processor 1310 may communicate with another device or chip via the transceiver 1330. For example, the processor 1310 may perform data transmission/reception with another device or chip via the transceiver 1330.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that the terms "system" and "network" in the present disclosure may be used interchangeably. In addition, the terms used in the present disclosure are merely used to explain specific embodiments of the present disclosure, and are not intended to limit the present disclosure. In the description, claims, and accompanying drawings of the present disclosure, the terms "first", "second", "third", "fourth", and the like are used to distinguish different objects rather than describe a specific order. In addition, the terms "including" and "having" and any variations thereof are intended to cover non-exclusive inclusion.

It should be understood that the term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

In the embodiments of the present disclosure, the term "corresponding" may indicate that there is a direct correspondence or indirect correspondence between the two, or may indicate that there is an association relationship between the two, or may be relationships such as indicating and being indicated, configuring and being configured, etc.

It should be understood that the terms "predefined" and "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

It should be understood that the term "protocol" in the embodiments of the present disclosure may refer to a standard protocol in the field of communications, such as an LTE protocol, an NR protocol, and related protocols applied to a future communications system, which is not limited in the present disclosure.

The term "and/or" in the embodiments of the present disclosure is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In the embodiments of the present disclosure, the term "including" may refer to directly including or may be indirectly including. Optionally, the "including" mentioned in the embodiments of the present disclosure may be replaced with "indicating" or "used for determining". For example, A includes B, may be replaced with A indicates B, or A is used to determine B.

It should be understood that in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

## Claims

1. A method for wireless communication, comprising:
executing, by a terminal device, a first operation based on first information;
wherein the first information includes one or more of: network energy saving, NES, information of a first cell where the terminal device is located, NES information of a second cell, and a first conditional handover threshold related to one or both of an NES state of the first cell and an NES state of the second cell; and wherein the first operation includes one or more of:
determining a cell that meets a conditional handover requirement;
determining a first time for a handover from the first cell to the second cell; and
measuring a third cell in a first time period between a second time and the first time to determine whether the third cell meets the conditional handover requirement, wherein the second time is a time when the terminal device determines that the second cell meets the conditional handover requirement.

2. The method according to claim 1, wherein the first conditional handover threshold includes one or both of:
a value of the first conditional handover threshold; and
a first difference between the first conditional handover threshold and a reference threshold.

3. The method according to claim 2, wherein the reference threshold satisfies one or more of: configured by a network device, pre-configured, and specified by a protocol.

4. The method according to claim 2 or claim 3, wherein the first conditional handover threshold satisfies one or more of: configured by a network device, pre-configured, and specified by a protocol.

5. The method according to any one of claims 2 to 4, wherein the first conditional handover threshold includes one or more of:
a second conditional handover threshold when the first cell in a power-saving state;
a third conditional handover threshold when the first cell in a non-power-saving state;
a fourth conditional handover threshold when the second cell in the power-saving state; and
a fifth conditional handover threshold when the second cell in the non-power-saving state.

6. The method according to any one of claims 1 to 5, wherein the first time is determined according to one or more of:
the first information;
the second time; and
whether the terminal device has data to send and/or receive at the second time.

7. The method according to claim 6, wherein the first information is used to indicate a power-saving time period of the first cell, and the first time is determined according to the second time if the second time is within the power-saving time period of the first cell.

8. The method according to claim 6, wherein the first information is used to indicate a non-power-saving time period of the first cell, and the first time is determined according to an end time of the non-power-saving time period of the first cell if the second time is within the non-power-saving time period of the first cell.

9. The method according to any one of claims 6 to 8, wherein the first time is determined according to an end time of sending and/or receiving of the data if the terminal device has the data to send and/or receive at the second time.

10. The method according to any one of claims 6 to 8, wherein the first time is determined according to the second time if the terminal device has no data to send and/or receive at the second time.

11. The method according to any one of claims 6 to 10, wherein the first information is used to indicate a non-power-saving time period of the second cell, and the first time is determined according to the second time if the second time is within the non-power-saving time period of the second cell.

12. The method according to any one of claims 6 to 10, wherein the first information is used to indicate a power-saving time period of the second cell, and the first time is determined according to the second time and a start time of a non-power-saving time period of the second cell if the second time is within the power-saving time period of the second cell.

13. The method according to claim 12, wherein the first time is within a first duration before the start time of the non-power-saving time period of the second cell.

14. The method according to claim 13, wherein the first duration is a duration required for the terminal device to complete random access.

15. The method according to claim 14, wherein the time difference is equal to the first duration.

16. The method according to any one of claims 13 to 15, wherein the first duration satisfies one or more of: configured by a network device, pre-configured, and specified by a protocol.

17. The method according to any one of claims 1 to 16, wherein the NES state of the first cell changes at a first change time, and the NES state of the second cell changes at a second change time; and
wherein the executing, by the terminal device, the first operation based on the first information includes:
executing, by the terminal device, the first operation based on the first information at one of the first change time and the second change time.

18. The method according to any one of claims 1 to 17, wherein whether the terminal device needs to measure the third cell in the first time period is indicated using first indication information, and the first indication information satisfies one or more of: configured by a network device, pre-configured, and specified by a protocol.

19. The method according to any one of claims 1 to 18, wherein in a case that the third cell meets the conditional handover requirement, one of the second cell and the third cell is determined as an accessed cell according to one or more of:
the first time;
the second time;
a third time, wherein the third time is a handover time from the first cell to the third cell; and
a fourth time, wherein the fourth time is a time when the terminal device determines that the third cell meets the conditional handover requirement.

20. The method according to any one of claims 1 to 19, further comprising:
receiving, by the terminal device, second indication information;
wherein the second indication information is used to indicate the first information.

21. A method for wireless communication, comprising:
sending, by a network device, indication information;
wherein the indication information includes second indication information, the second indication information is used to indicate first information, and the first information includes one or more of: network energy saving, NES, information of a first cell where a terminal device is located, NES information of a second cell, and a first conditional handover threshold related to one or both of an NES state of the first cell and an NES state of the second cell.

22. The method according to claim 21, wherein in a case that the network device corresponds to the first cell, the method further includes:
receiving, by the network device corresponding to the first cell, third indication information sent by a network device corresponding to the second cell;
wherein the third indication information is used to indicate the NES information of the second cell.

23. The method according to claim 22, further comprising:
sending, by the network device corresponding to the first cell, a request message to request to send the third indication information.

24. The method according to claim 22 or claim 23, wherein the indication information includes one of unprocessed third indication information and processed third indication information.

25. A terminal device, comprising:
an execution unit, configured to execute a first operation based on first information;
wherein the first information includes one or more of: network energy saving, NES, information of a first cell where the terminal device is located, NES information of a second cell, and a first conditional handover threshold related to one or both of an NES state of the first cell and an NES state of the second cell; and wherein the first operation includes one or more of:
determining a cell that meets a conditional handover requirement;
determining a first time for a handover from the first cell to the second cell; and
measuring a third cell in a first time period between a second time and the first time to determine whether the third cell meets the conditional handover requirement, wherein the second time is a time when the terminal device determines that the second cell meets the conditional handover requirement.

26. The terminal device according to claim 25, wherein the first conditional handover threshold includes one or both of:
a value of the first conditional handover threshold; and
a first difference between the first conditional handover threshold and a reference threshold.

27. The terminal device according to claim 26, wherein the reference threshold satisfies one or more of: configured by a network device, pre-configured, and specified by a protocol.

28. The terminal device according to claim 26 or claim 27, wherein the first conditional handover threshold satisfies one or more of: configured by a network device, pre-configured, and specified by a protocol.

29. The terminal device according to any one of claims 26 to 28, wherein the first conditional handover threshold includes one or more of:
a second conditional handover threshold when the first cell in a power-saving state;
a third conditional handover threshold when the first cell in a non-power-saving state;
a fourth conditional handover threshold when the second cell in the power-saving state; and
a fifth conditional handover threshold when the second cell in the non-power-saving state.

30. The terminal device according to any one of claims 25 to 29, wherein the first time is determined according to one or more of:
the first information;
the second time; and
whether the terminal device has data to send and/or receive at the second time.

31. The terminal device according to claim 30, wherein the first information is used to indicate a power-saving time period of the first cell, and the first time is determined according to the second time if the second time is within the power-saving time period of the first cell.

32. The terminal device according to claim 30, wherein the first information is used to indicate a non-power-saving time period of the first cell, and the first time is determined according to an end time of the non-power-saving time period of the first cell if the second time is within the non-power-saving time period of the first cell.

33. The terminal device according to any one of claims 30 to 32, wherein the first time is determined according to an end time of sending and/or receiving of the data if the terminal device has the data to send and/or receive at the second time.

34. The terminal device according to any one of claims 30 to 32, wherein the first time is determined according to the second time if the terminal device has no data to send and/or receive at the second time.

35. The terminal device according to any one of claims 30 to 34, wherein the first information is used to indicate a non-power-saving time period of the second cell, and the first time is determined according to the second time if the second time is within the non-power-saving time period of the second cell.

36. The terminal device according to any one of claims 30 to 35, wherein the first information is used to indicate a power-saving time period of the second cell, and the first time is determined according to the second time and a start time of a non-power-saving time period of the second cell if the second time is within the power-saving time period of the second cell.

37. The terminal device according to claim 36, wherein the first time is within a first duration before the start time of the non-power-saving time period of the second cell.

38. The terminal device according to claim 37, wherein the first duration is a duration required for the terminal device to complete random access.

39. The terminal device according to claim 38, wherein the time difference is equal to the first duration.

40. The terminal device according to any one of claims 37 to 39, wherein the first duration satisfies one or more of: configured by a network device, pre-configured, and specified by a protocol.

41. The terminal device according to any one of claims 25 to 40, wherein the NES state of the first cell changes at a first change time, and the NES state of the second cell changes at a second change time; and
wherein the executing, by the terminal device, the first operation based on the first information includes:
executing, by the terminal device, the first operation based on the first information at one of the first change time and the second change time.

42. The terminal device according to any one of claims 25 to 41, wherein whether the terminal device needs to measure the third cell in the first time period is indicated using first indication information, and the first indication information satisfies one or more of: configured by a network device, pre-configured, and specified by a protocol.

43. The terminal device according to any one of claims 25 to 42, wherein in a case that the third cell meets the conditional handover requirement, one of the second cell and the third cell is determined as an accessed cell according to one or more of:
the first time;
the second time;
a third time, wherein the third time is a handover time from the first cell to the third cell; and
a fourth time, wherein the fourth time is a time when the terminal device determines that the third cell meets the conditional handover requirement.

44. The terminal device according to any one of claims 25 to 43, wherein the terminal device is further configured to:
receive second indication information;
wherein the second indication information is used to indicate the first information.

45. A network device, comprising:
a sending unit, configured to send indication information;
wherein the indication information includes second indication information, the second indication information is used to indicate first information, and the first information includes one or more of: network energy saving, NES, information of a first cell where a terminal device is located, NES information of a second cell, and a first conditional handover threshold related to one or both of an NES state of the first cell and an NES state of the second cell.

46. The network device according to claim 45, wherein in a case that the network device corresponds to the first cell, the network device is further configured to:
receive, by the network device corresponding to the first cell, third indication information sent by a network device corresponding to the second cell;
wherein the third indication information is used to indicate the NES information of the second cell.

47. The network device according to claim 46, wherein the network device is further configured to:
send, by the network device corresponding to the first cell, a request message to request to send the third indication information.

48. The network device according to claim 46 or claim 47, wherein the indication information includes one of unprocessed third indication information and processed third indication information.

49. A terminal device, comprising a memory and a processor, wherein the memory is configured to store a program, and the processor is configured to invoke the program in the memory to cause the terminal device to perform the method according to any one of claims 1 to 20.

50. A network device, comprising a memory and a processor, wherein the memory is configured to store a program, and the processor is configured to invoke the program in the memory to cause the network device to perform the method according to any one of claims 21 to 24.

51. An apparatus, comprising a processor, wherein the processor is configured to invoke a program from a memory to cause the apparatus to perform the method according to any one of claims 1 to 24.

52. A chip, comprising a processor, wherein the processor is configured to invoke a program from a memory to cause a device installed with the chip to perform the method according to any one of claims 1 to 24.

53. A computer-readable storage medium storing a program, wherein the program causes a computer to perform the method according to any one of claims 1 to 24.

54. A computer program product, comprising a program, wherein the program causes a computer to perform the method according to any one of claims 1 to 24.

55. A computer program, wherein the computer program causes a computer to perform the method according to any one of claims 1 to 24.
